# EUROPÄISCHE PATENTSCHRIFT

(11) **EP 1 427 620 B1**
(45) Veröffentlichungstag und Bekanntmachung des Hinweises auf die Patenterteilung: **01.09.2010**
(21) Anmeldenummer: 02767138.7
(22) Anmeldetag: 07.09.2002
(51) Int. Cl.: B60T 8/00

(54) **VERFAHREN UND VORRICHTUNG ZUR VERBESSERUNG DER DRUCKAUFBAUDYNAMIK**
METHOD AND DEVICE FOR IMPROVING PRESSURE BUILD-UP DYNAMICS
PROCEDE ET DISPOSITIF PERMETTANT D'AMELIORER LA DYNAMIQUE DE MISE EN PRESSION

(30) Priorität: 12.09.2001 DE 10144879
(43) Veröffentlichungstag der Anmeldung: 16.06.2004
(73) Patentinhaber: ROBERT BOSCH GMBH, 70442 Stuttgart (DE)
(72) Erfinder: SCHMITT, Johannes, 71706 Markgroeningen (DE)
(86) Internationale Anmeldenummer: PCT/DE2002/003335
(87) Internationale Veröffentlichungsnummer: WO 2003/024758

(56) Entgegenhaltungen:
- EP-A- 1 081 004
- DE-A- 4 037 468
- US-B1- 6 219 610

## Beschreibung

### Stand der Technik

Die Erfindung geht aus von einem Verfahren und einer Vorrichtung zur Steuerung der Bremsanlage eines Fahrzeugs.

In der DE 196 15 294 A1 wird eine Vorrichtung bzw. ein Verfahren zur Steuerung der Bremskraft an wenigstens einem Rad eines Fahrzeuges vorgeschlagen, welche bzw. welches folgende Mittel enthält: Mittel zur Ermittlung eines die Fahrzeugbewegung beschreibenden und/oder beeinflussenden Kriteriums, Mittel zur Ermittlung einer die Raddynamik des zugehörigen Rades beschreibenden Größe und Mittel, mit denen in Abhängigkeit des ermittelten, die Fahrzeugbewegung beschreibenden und/oder beeinflussenden, Kriteriums festgestellt wird, ob ein fahrerunabhängiger Bremseneingriff an einem Rad absehbar ist. Desweiteren enthält die Vorrichtung bzw. das Verfahren Mittel, mit denen bei Vorliegen der Erfordernis eines absehbaren fahrerunabhängigen Bremseneingriffes, zeitlich vor diesem absehbaren fahrerunabhängigen Bremseneingriff, eine geringfügige Betätigung variabler Dauer der dem Rad zugeordneten Aktuatoren durchführbar ist. Die Dauer der geringfügigen Betätigung der Aktuatoren wird dabei wenigstens in Abhängigkeit der die Raddynamik des zugehörigen Rades beschreibenden Größen ermittelt.

In der DE 195 47 111 A1 wird ein Verfahren und eine Vorrichtung zur Steuerung der Bremsanlage eines Fahrzeugs vorgeschlagen, bei welchem bereits vor Beginn der Antriebsschlupfregelung Druck in die Radbremsen bei Vorliegen gegebener Bedingungen eingesteuert wird, wobei keine nennenswerte Bremswirkung an den Antriebsrädern aufgebracht wird.

Die Merkmale des Oberbegriffs gehen aus der DE 195 47 111 A1 hervor.

### Vorteile der Erfindung

Bei der vorliegenden Erfindung handelt es sich um ein Verfahren und eine Vorrichtung zur Verbesserung der Druckaufbaudynamik.

Die Erfindung geht aus von einer Vorrichtung zur Steuerung der Bremsanlage eines mit einem Radschlupfregelungssystem ausgestatteten Fahrzeugs. Dabei ist das Radschlupfregelungssystem in der Lage,
- als Folge der Erfüllung gegebener Bedingungen den Aufbau erster Bremsmomente an zumindest einem Rad in der zugehörigen zumindest einen Radbremse zu initiieren, sowie
- vorbereitende Maßnahmen für den Aufbau von zweiten Bremsmomenten in den Radbremsen der restlichen Rädern zu initiieren, wobei die vorbereitenden Maßnahmen zu keiner oder zu keiner nennenswerten Bremswirkung in den Radbremsen der restlichen Räder führen.

Vorteilhafterweise werden die vorbereitenden Maßnahmen für den Aufbau von zweiten Bremsmomenten in Reaktion auf den Aufbau der ersten Bremsmomente getroffen werden.

Dadurch dass die vorbereitenden Maßnahmen für den Aufbau von zweiten Bremsmomente erst nach Initiierung des Aufbaus der ersten Bremsmomente aufgebaut werden, wird die Gefahr einer unnötigen Bremsenaktivierung verringert. Dies führt nebenbei auch zu einer Komponentenentlastung und einem geringeren Verschleiß der Bauelemente des Bremskreises.

Besonders vorteilhaft wirkt sich die Erfindung aus, wenn es sich bei dem Radschlupfregelungssystem um ein Fahrdynamikregelungssystem handelt. Bei einer sich im Einsatz befindenden und Bremsbetätigungen ausführenden Fahrdynamikregelung liegt zwischen zwei Eingriffen an verschiedenen Bremsen eine Zeitspanne der Größenordnung 200 Millisekunden. Sobald die Fahrdynamikregelung erstmals an einem Rad eingreift, steht also für den Aufbau der zweiten Bremsmomente in den restlichen Rädern eine Zeit der Größenordnung 200 Millisekunden zur Verfügung. Diese Zeitdauer ist ausreichend, um in den noch nicht vom Eingriff der Fahrdynamikregelung betroffenen Rädern zweite Bremsmomente aufzubauen, die jedoch noch zu keiner oder zu keiner nennenswerten Bremswirkung führen. Diese zweiten Bremsmomente sind im Idealfall so groß, dass das Lüftspiel der Bremse, d.h. der Abstand zwischen Bremsbacken und Bremsscheibe, gerade verschwindet. In diesem Fall führt jede weitere Erhöhung des Bremsdrucks zu einer sofortigen Bremswirkung.

Vorteilhaft ist weiterhin, wenn es sich bei den gegebenen Bedingungen um Bedingungen handelt, bei deren Erfüllung das Fahrzeug in einen bezüglich der Fahrstabilität potentiell gefährlichen Zustand gerät. In diesem Fall führt die Einleitung der vorbereitenden Maßnahmen für den Aufbau von zweiten Bremsmomenten zu einer höheren Fahrstabilität.

Von Vorteil ist es, wenn die ersten Bremsmomente vom Fahrdynamikregelungssystem bereits so gewählt werden, dass sie fahrstabilisierend wirken.

Als Folge der vorbereitenden Maßnahmen für den Aufbau von zweiten Bremsmomenten werden die Bremsbeläge möglichst nahe an die jeweilige Bremsscheibe herangebracht. Es ist evident, dass damit eine besonders schnelle Bremsung auch an diesen Rädern eingeleitet werden kann.

Da das Fahrzeug erfindungsgemäß über zwei separate hydraulische Bremskreise verfügt, bestehen die vorbereitenden Maßnahmen für den Aufbau von zweiten Bremsmomenten im Bremskreis, in welchem kein oder kein nennenswertes erstes Bremsmoment als Folge des Vorliegens erster Bedingungen aufgebaut wird, unter anderem darin, dass
- die Rückförderpumpe, sofern nicht bereits in Betrieb, in Betrieb genommen wird,
- die Einlassventile der Radbremsen, sofern nicht bereits in dieser Stellung, in Durchlasstellung gebracht werden,
- die Auslassventile der Radbremsen, sofern nicht bereits in dieser Stellung, in Sperrstellung gebracht werden,
- das Umschaltventil, sofern nicht bereits in dieser Stellung, in Durchlasstellung gebracht wird und
- das Hochdruckschaltventil, sofern nicht bereits in dieser Stellung, in Durchlasstellung gebracht wird.

Dabei wird vorausgesetzt, dass jeder der beiden Bremskreise über
- ein Umschaltventil, welches bei einem nicht durch den Fahrer betätigten Bremseingriff in Sperrstellung ist und
- ein Hochdruckschaltventil, welches in Durchlassstellung ist, wenn im Bremskreis durch Aktivierung der Rückförderpumpe ein Bremseingriff durchgeführt werden soll,
verfügt.

Die genannten Bauteile sind in modernen Fahrzeugen, welche beispielsweise mit einem Fahrdynamikregelungssystem ausgerüstet sind, ohnehin enthalten. Deshalb entsteht vorteilhafterweise kein wesentlicher materieller Zusatzaufwand.

Ein vorteilhafter Einsatzbereich für die vorliegende Erfindung bietet sich, wenn das Fahrzeug neben einem Radschlupfregelungssystem auch über ein System für die Umfeldsensorik verfügt, welches mittels der Auswertung der von der Umweltsensorik gelierten Signale in der Lage ist, eine Geschwindigkeits- und Abstandsregelung für das Fahrzeug durchzuführen, und wenn in die Überprüfung, ob die gegebenen Bedingungen erfüllt sind, die von der Umweltsensorik gelieferten Signale eingehen. Dies ermöglicht ein schnelleres Reagieren eines Systems zur automatischen Fahrtgeschwindigkeits- und Abstandsregelung (z.B. ACC) bei durch die Sensorik festgestellten Hindernissen bzw. Fremdfahrzeugen.

Vorteilhafterweise arbeitet das System für die Umweltsensorik mit Radar, Lidar oder Video.

Weitere vorteilhafte Ausgestaltungen der Erfindung sind den Unteransprüchen zu entnehmen.

### Zeichnung

Ein Ausführungsbeispiel der Erfindung ist in der folgenden Zeichnung dargestellt und erläutert. Die Zeichnung besteht aus den Figuren 1 bis 8.
Fig. 1 zeigt schematisch den Aufbau der erfindungsgemäßen Vorrichtung
Fig. 2 zeigt ein Fahrmanöver, bei dem Bremseingriffe an zwei unterschiedlichen Rädern zu unterschiedlichen Zeitpunkten vorgenommen werden.
Fig. 3 zeigt in Form eines Flussdiagramms den Verfahrensablauf zur Verbesserung der Druckaufbaudynamik.
Fig. 4 zeigt in vereinfachter und schematischer Art und Wiese die topologische Struktur der Bremskreise eines mit einem Fahrdynamikregelungssystem ausgerüsteten Fahrzeugs.
Fig. 5 zeigt den gemessenen Staudruck als Funktion der Temperatur der Bremsflüssigkeit.
Fig. 6 zeigt in qualitativer Art und Weise den Anstieg des Staudrucks als Funktion der Zeit.
Fig. 7 zeigt einen Vergleich der Druckaufbauzeiten auf 50 bar Radbremsdruck über der Temperatur der hydraulischen Regeleinrichtung.
Fig. 8 zeigt den Bremseingriffs- und Druckverlauf bei einem Spurwechselmanöver.

### Ausführungsbeispiele

Bei der vorliegenden Erfindung handelt es sich um ein Verfahren und eine Vorrichtung zur Verbesserung der Druckaufbaudynamik.

Betrachtet wird ein mit einem Radschlupfregelungssystem ausgestattetes Fahrzeug. Weiterhin verfügt das Fahrzeug über eine Bremsanlage. Dabei kann es sich beispielsweise um eine hydraulische Bremsanlage, eine pneumatische Bremsanlage, eine elektropneumatische Bremsanlage (EPB), eine elektrohydraulische Bremsanlage (EHB) oder eine elektromechanische Bremsanlage (EMB) handeln.

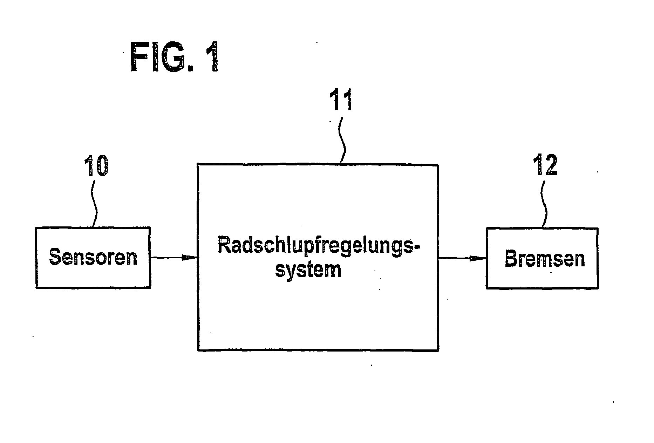

Einen ersten schematischen Überblick über den Aufbau der erfindungsgemäßen Vorrichtung liefert Fig. 1. Darin liefern Sensoren 10 Signale an ein Radschlupfregelungssystem 11. Die Ausgangssignale von Block 11 gehen an Bremsen 12.

Bei den Sensoren 10 kann es sich beipielsweise um Sensoren aus dem Bereich der Fahrdynamikregelung handeln. Hier wären beispielsweise Lenkwinkelsensoren, Raddrehzahlsensoren, Querbeschleunigungssensoren oder Gierratensensoren zur nennen.

Es kann sich beispielsweise auch um Sensoren aus dem Bereich der Umfeldsensorik für die adaptive Geschwindigkeits- und Abstandsregelung handeln. Dann müssen die Sensoren zur Verarbeitung von Radarsignalen, Lidarsignalen oder Videoaufnahmen geeignet sein.

Im Radschlupfregelungssystem 11 findet eine Überprüfung statt, ob vorgegebene Bedingungen erfüllt sind.

Diese Bedingungen können sich beispielsweise auf folgende Punkte beziehen:
1. Lenkwinkel oder Lenkwinkelgradient
2. Querbeschleunigung oder Querbeschleunigungsgradient
3. Fahrdynamische Messgrößen wie Radgeschwindigkeiten, Radbeschleunigungen, Schlupf, Gierrate,...
4. Aus dem Radarsignal erfasstes kommendes Hindernis
5. Aus der Navigation ermittelte kommende Kurve
6. Bremsdruck oder Bremsdruckgradient, wobei das Hochdruckschaltventil nicht oder noch nicht geschaltet wird.

Wenn das Radschlupfregelungssystem als Fahrdynamikregelungssystem ausgeprägt ist, kann beispielsweise überprüft werden, ob die Gierrate des Fahrzeugs einen Schwellenwert überschreitet. Wird die Überschreitung des Schwellenwerts festgestellt, werden vom Fahrdynamikregelungssystem aus Gründen der Fahrsicherheit an vom Fahrdynamikregelungssystem ausgewählten Bremsen erste Bremseingriffe vorgenommen. Diese ersten Bremseingriffe wirken zumeist nur auf selektive Räder. Im Verlauf eines Fahrdynamikregelungsprozesses werden jedoch häufig die Räder, an denen Bremseingriffe vorgenommen werden, gewechselt.

Ein Wechsel zwischen Bremseingriffen an verschiedenen Rädern ist im Buch "Fahrsicherheitssysteme (2. Auflage, 1998, ISBN-Nummer 3-528-03875-6)" auf den Seiten 206 und 207 dargestellt.

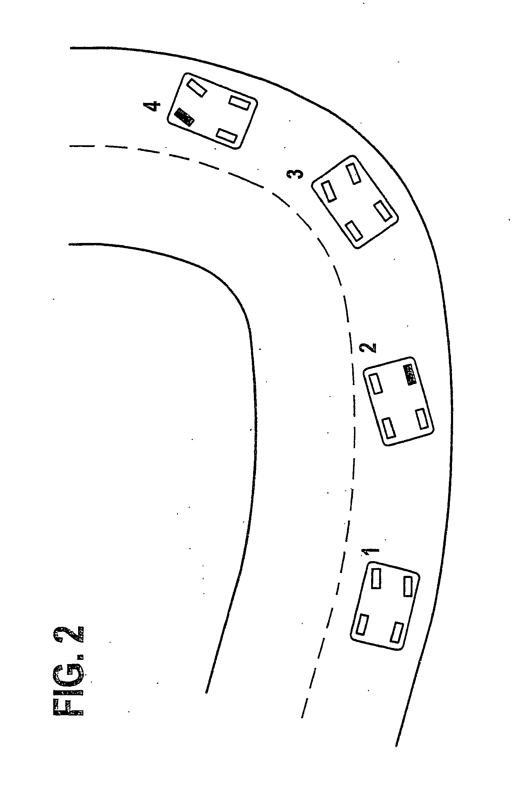

In Fig. 2 werden die wesentlichen Punkte davon dargestellt. Gezeigt wird in Fig. 2 ein mit einem Fahrdynamikregelungssystem ausgestattetes Kraftfahrzeug bei einer Fahrt durch eine Linkskurve.

In Zustand 1 wird das Fahrzeug beim Eintritt in die Linkskurve gezeigt. Der Fahrer überzieht die Lenkung, in Zustand 2 droht eine Instabilität. Deshalb erfolgt in Zustand 2 ein Bremseingriff am rechten Vorderrad. Damit bleibt das Fahrzeug unter Kontrolle, wie in Zustand 3 dargestellt. Eine erneute drohende Instabilität wird in Zustand 4 durch einen Bremseingriff am linken Vorderrad abgewendet. Damit ist das Fahrzeug stabilisiert. Das gebremste Rad ist in Fig. 2 jeweils schwarz ausgefüllt dargestellt.

Nun wird zur Betrachtung von Fig. 1 zurückgekehrt. Dem ersten Bremseingriff entspricht in Fig. 2 im Zustand 2 die Bremse am rechte Vorderrad. An denjenigen Radbremsen, an welchen keine ersten Bremsmomente erzeugt werden, werden nun vorbereitende Maßnahmen für eine möglicherwiese kommende Bremsung erzeugt. Der Zweck dieser vorbereitenden Maßnahmen besteht darin, dass die zweiten Bremsen in einen möglichst "bremsbereiten Zustand" versetzt werden. Das kann sich darin äußern, dass die Bremsbacken oder Bremsbeläge möglichst nahe an die Bremsscheiben herangeführt werden. Der Abstand zwischen Bremsbelägen und Bremsscheiben wird als Lüftspiel bezeichnet. Dieses Lüftspiel soll nun möglichst klein gemacht werden, es soll jedoch noch keine Berührung zwischen Bremsbelägen und Bremsscheiben auftreten. Dieser Vorgang wird im folgenden auch als "Vorspannen der Radbremsen" bezeichnet. Damit kann eine mögliche spätere Bremsung nun schneller erfolgen. Es ist sofort anschaulich klar, dass im Zustand 4 (siehe nochmals Fig. 2) nun eine schnellere Bremsung des linken Vorderrades erfolgen kann, wenn in Zustand 2 mit der Bremsung des rechten Vorderrades bei den übrigen Rädern zugleich das Lüftspiel verringert wurde.

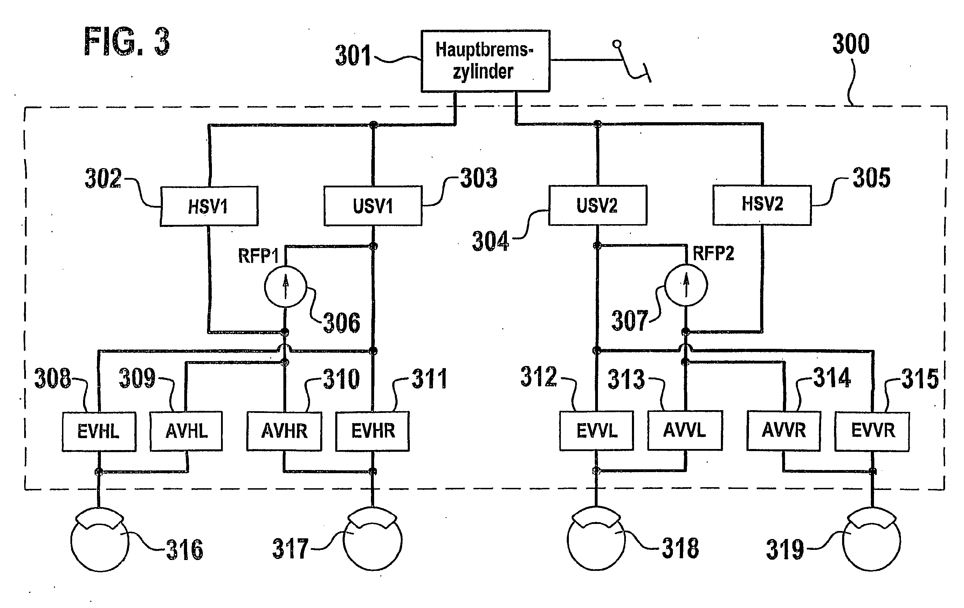

In Fig. 3 ist in schematischer Art und Weise das Bremssystem eines mit einem Fahrdynamikregelungssystem ausgestatteten Fahrzeugs dargestellt. Dabei wurden alle für das Verständnis unwesentlichen Teile weggelassen. Es wurde ein Bremssystem mit zwei Bremskreisen betrachtet: Bremskreis 1 ist linke Zweig in Fig.3 (er wird auch als Schwimmkreis bezeichnet), der rechte Zweig ist Bremskreis 2 (er wird auch als Stangenkreis bezeichnet). Dabei erstrecke sich der Bremskreis 1 über die Hinterräder und der Bremskreis 2 erstrecke sich über die Vorderräder. Diese Aufteilung wird auch als II-Aufteilung bezeichnet. Selbstverständlich sind auch andere Aufteilungen denkbar.
(Details hierzu finden sich beispielsweise in "Kraftfahrtechnisches Taschenbuch, 23. Auflage, ISBN-Nr. 3-528-03876-4, S. 654-655) Bevor auf die Vorgänge im Bremssystem eingegangen wird, sollen zuerst die einzelnen Blöcke kurz vorgestellt werden:
300: Hydraulische Bremsdruckregeleinrichtung
301: Hauptbremszylinder
302: HSV1 (= Hochdruckschaltventil von Bremskreis 1)
303: USV1 (= Umschaltventil von Bremskreis 1)
306: RFP1 (= Rückförderpumpe von Bremskreis 1)
308: EVHL (= Einlassventil hinten links, d.h. an der Bremse des linken Hinterrads)
309: AVHL (= Auslassventil hinten links)
311: EVHR (= Einlassventil hinten rechts)
310: AVHR (= Auslassventil hinten rechts)
316: Radbremse des linken Hinterrades
317: Radbremse der rechten Hinterrades
305: HSV2 (= Hochdruckschaltventil von Bremskreis 2)
304: USV2 (= Umschaltventil von Bremskreis 2)
307: RFP2 (= Rückförderpumpe von Bremskreis 2)
312: EWL (= Einlassventil vorne links)
313: AWL (= Auslassventil vorne links)
315: EVVR (= Einlassventil vorne rechts)
314: AVVR (= Auslassventil vorne rechts)
318: Radbremse des linken Vorderrades
319: Radbremse der rechten Vorderrades

Die beiden Rückförderpumpen sind von einem gemeinsamen Motor angetrieben, d.h. sie werden parallel in Betrieb genommen.

Vom Hauptbremszylinder 301 gehen zwei Leitungen zu der Bremsdruckregeleinrichtung 300. Darin erfolgt eine Verzweigung zu den Hochdruckschaltventilen 302 und 305 und zu den Umschaltventilen 303 und 304. Das Hochdruckschaltventil 302 ist mit den Auslassventilen 309 und 310 sowie der Saugseite der Rückförderpumpe 306 verbunden. Das Umschaltventil 303 ist mit den Einlassventilen 308 und 311 sowie der Förderseite der Rückförderpumpe 306 verbunden. Die Ausgangssseite des Einlassventils 308 und die Eingangsseite des Auslassventils 309 sind verbunden mit der Radbremse 316, ebenso das Einlassventil 311 und das Auslassventil 310 mit der Radbremse 317.

Das Hochdruckschaltventil 305 ist mit den Auslassventilen 313 und 314 sowie der Saugseite der Rückförderpumpe 307 verbunden. Das Umschaltventil 304 ist mit den Einlassventilen 312 und 315 sowie der Förderseite der Rückförderpumpe 307 verbunden. Die Ausgangsseite des Einlassventils 312 und die Eingangsseite des Auslassventils 313 sind verbunden mit der Radbremse 318, ebenso das Einlassventil 315 und das Auslassventil 314 mit der Radbremse 319.

Die Rückförderpumpe 306 liegt zwischen dem Umschaltventil 303 (Förderseite) und dem Auslassventil 310 (Saugseite), die Rückförderpumpe 307 liegt zwischen dem Umschaltventil 304 (Förderseite) und dem Auslassventil 313 (Saugseite).

Zur Veranschaulichung werde nun ein plötzlich einsetzender Fahrdynamikregelunggseingriff am rechten Hinterrad mit der zugehörigen Radbremse 317 betrachtet.

Zuerst sollen aber die Begriffe "gesperrt" und "durchgeschaltet" erklärt werden:
Ein sperrendes Ventil erlaubt keinen Durchfluß der Bremsflüssigkeit, ein durchgeschaltetes Ventil erlaubt Durchfluß der Bremsflüssigkeit, im idealen Fall sogar ohne Druckverlust.

Mit Einsetzen des Regelungseingriffs geht die Rückförderpumpe 306 und damit auch die Rückförderpumpe 307 in Betrieb. Dies ist Voraussetzung für die Durchführung eines fahrerunabhängigen Bremseneingriffs durch das Fahrdynamikregelungssystem. Es erfolgt allerdings kein fahrerabhängiger Bremseneingriff. Im Hauptbremszylinder ist deshalb der Umgebungsdruck vorhanden, d.h. kein Bremsdruck ist aufgebaut.

Der in beiden Pumpen eingezeichnete Pfeil gibt die Förderrichtung an. Im Schwimmkreis (hinterer Bremskreis) wird das Umschaltventil 303 gesperrt. Das Hochdruckschaltventil 302 ist durchgeschaltet. Die Rückförderpumpe 306 ist auf der Ansaugseite über das Hochdruckschaltventil mit dem Hauptbremszylinder sowie den Auslassventilen 309 und 310 verbunden. Auf der Förderseite fördert die Rückförderpumpe nun über das durchgeschaltete Einlassventil 311 Bremsflüssigkeit in die Radbremse 317. Es findet ein Bremsmomentenaufbau am rechten Hinterrad statt.

Im Stangenkreis (vorderer Bremskreis) geht die Rückförderpumpe gleichzeitig auch in Betrieb. In diesem Kreis werden die Auslassventile 313 und 314 gesperrt. Das Umschaltsteuerventil 304 und das Hochdruckschaltventil 305 sind beide durchgeschaltet. Damit zirkuliert nun die Bremsflüssigkeit in dem durch die Blöcke 304, 305 und 307 gegebenen Hydraulikkreis. Die Radbremsen 318 und 319 der Vorderräder sind über ihre durchgeschalteten Einlassventile 312 und 315 an die Förderseite der Rückförderpumpe 307 angeschlossen. Dort liegt im eingeschwungenen Zustand nach dem Einschalten ein Druck der Größenordnung 3 bar vor. Dieser als Staudruck bezeichnete Druck wird zur Vorspannung der Radbremsen 318 und 319 ausgenutzt.

Im Schwimmkreis kann auch das linke Hinterrad, welches sich nicht in der Fahrdynamikregelung befindet, vorgespannt werden. Da in diesem Hydraulikkreis das Umschaltventil 303 gesperrt ist, liegt an den Einlassventilen 311 und 308 ein höherer Druck an. Deshalb erfolgt dort in der Radbremse 316 der Aufbau eines nicht zu einer Bremswirkung bzw. keiner nennenswerten Bremswirkung führenden Drucks durch kurzzeitiges Durchschalten des Einlassventils 308 und anschließendes Sperren. Auch das Auslassventil 309 kann zu dieser Regelung mit herangezogen werden.

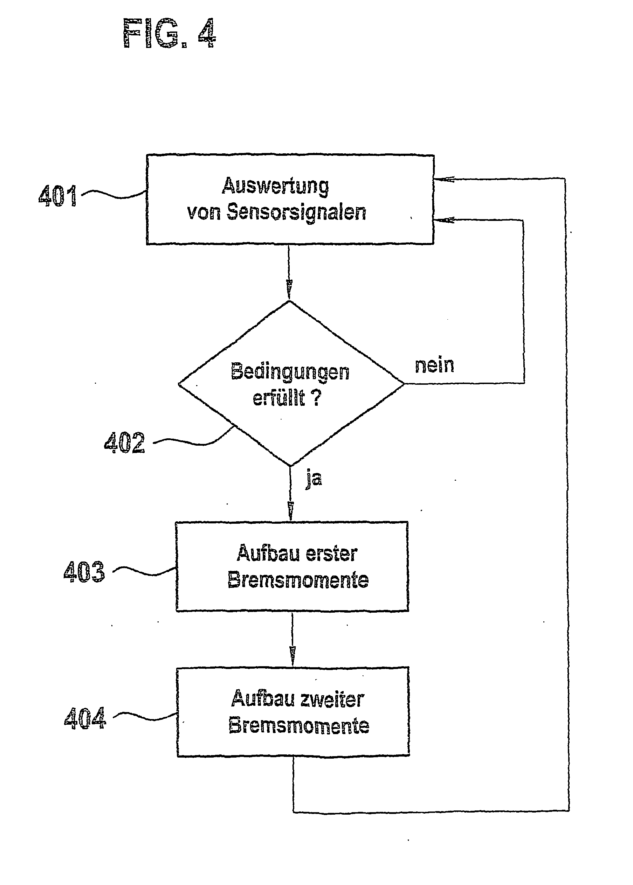

In Fig. 4 ist der beispielhafte Ablauf des Verfahrens in einem Flussdiagramm dargestellt.

In Block 401 erfolgt eine Auswertung von Sensorsignalen.

In Block 402 wird anschließend überprüft, ob gegebene Bedingungen erfüllt sind. Sie diese Bedingungen nicht erfüllt, werden die Sensorsignale zu einem späteren Zeitpunkt erneut ausgewertet. Sind die Bedingungen erfüllt, erfolgt in Block 403 zuerst ein Aufbau erster Bremsmomente und anschließend in Block 404 ein Aufbau zweiter Bremsmomente. Danach werden in Block 401 erneut die Sensorsignale ausgewertet.

Es ist denkbar, dass der präventive Druckaufbau an den nicht in der Radschlupfregelung befindlichen Rädern nur dann erfolgt, wenn gewisse Bedingungen erfüllt sind.
1. Nur bei tiefen Temperaturen. Bei tiefen Temperaturen ist die Bremsflüssigkeit zähflüssiger und damit erfolgt ein langsamerer Bremsmomentenaufbau. Hier ist ein Vorspannen der Radbremsen besonders nützlich.
2. Nur in einem bestimmten Fahrtgeschwindigkeitsbereich.
3. Nur für ausgewählte Räder. Die Auswahl der Räder kann beispielsweise von der Fahrtrichtung abhängen.
4. Nur bei Fahrt in großer Höhe. Die Höhe kann z.B. aus der Motorsteuerung oder barometrisch ermittelt werden.
5. Es sind auch Kombinationen der angeführten Punkte denkbar.
6. Selbstverständlich ist das Prinzip des Vorspannens der Bremsbeläge auch bei der elektromechanischen Bremse (EMB) anwendbar.

Auch eine Messung des Staudrucks durch im hydraulischen Kreis befindliche Drucksensoren ist denkbar. Damit ist eine Regelung des Staudrucks durch Auswertung der Messsignale und Ansteuerung der Rückförderpumpe möglich. Dies kann beispielsweise zu einer Drehzahlregelung des Pumpenmotors führen.

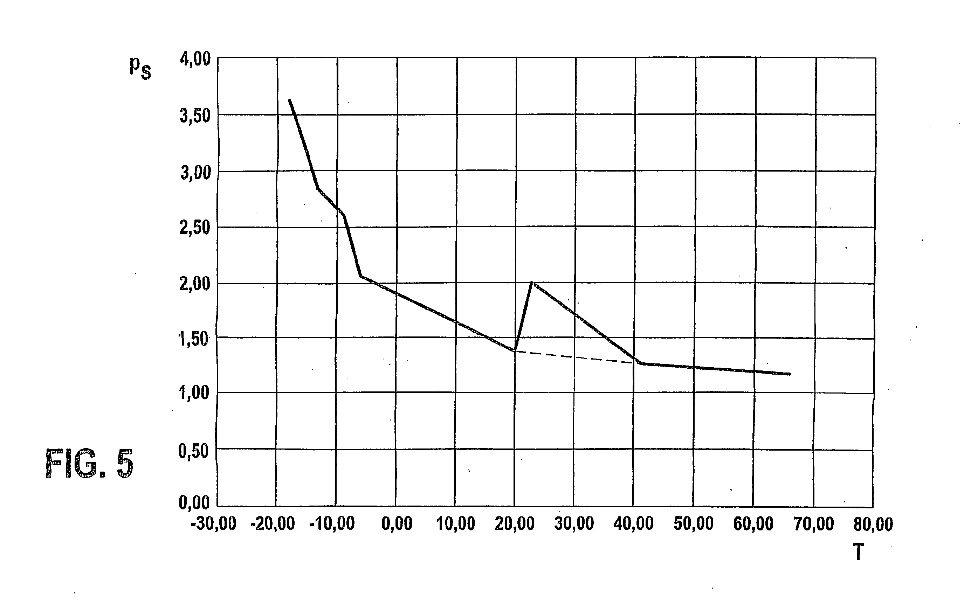

Messungen haben gezeigt, dass der Staudruck mit fallender Temperatur der Bremsflüssigkeit steigt. Das ist positiv, da sich die Druckaufbaudynamik durch einen höheren Staudruck verbessert. Fig. 5 zeigt den gemessenen Staudruck p_{S} als Funktion der Temperatur T der Bremsflüssigkeit.

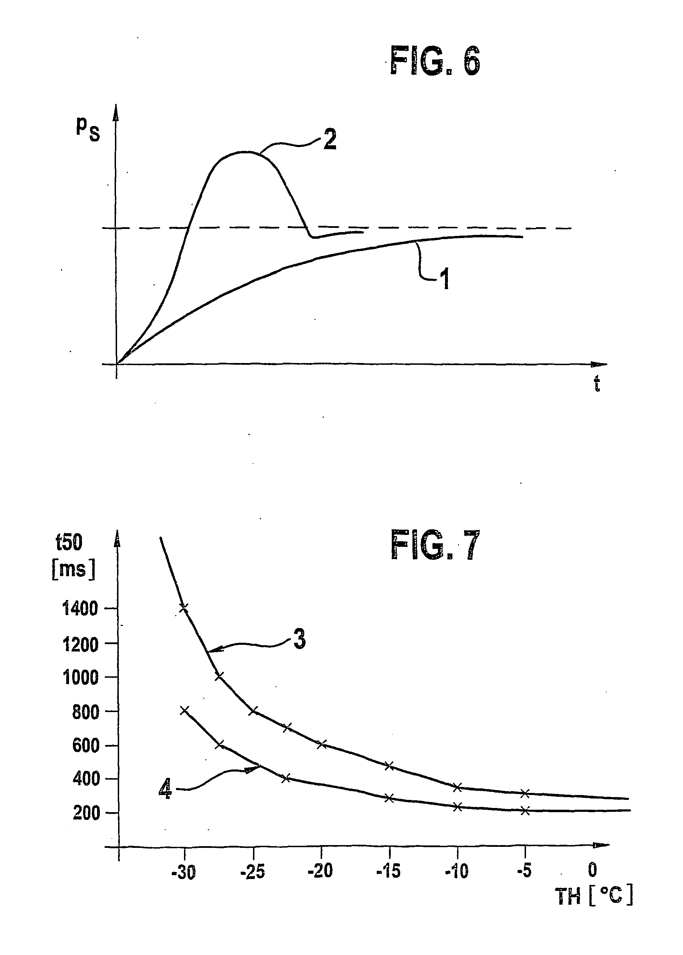

Es besteht die Möglichkeit, durch kurzzeitiges Sperren des Umschaltventils den Aufbau des Staudrucks zu beschleunigen. Durch die kurzzeitige Sperrung des Umschaltventils wird ein Druckpuls in den Radbremszylinder gegeben. Dieser Druckpuls kann sogar einen Maximalwert erreichen, welcher größer als der maximale Staudruck ist. Dieser Maximalwert wird nach Durchschalten des Umschaltventils jedoch wieder bis auf den Maximalwert des Staudrucks abgebaut. Eine solche Beschleunigung des Staudruckaufbaus ist in Fig. 6 dargestellt. In diesem Diagramm ist in Abszissenrichtung die Zeit t und in Ordinatenrichtung der Staudruck p_{S} dargestellt. Kurve 1 zeigt in qualitativer Weise, wie der Staudruck aufgebaut wird. Kurve 2 zeigt qualitativ die Beschleunigung des Staudruckaufbaus durch ein kurzzeitiges Sperren des Umschaltventils.

In Fig. 7 ist ein Vergleich der Druckaufbauzeit auf 50 bar Radbremsdruck (t50) über der Temperatur der hydraulischen Regeleinrichtung (TH) dargestellt. In Ordinatenrichtung (y-Achse) ist dabei die Zeit t50 in Millisekunden aufgetragen. Dies ist die für den Aufbau eines Radbremsdrucks von 50 bar erforderliche Zeit. In Abszissenrichtung (x-Achse) ist die Temperatur der hydraulischen Regeleinrichtung TH in Celsius aufgetragen. Kurve 3 zeigt den Verlauf ohne Maßnahmen, Kurve 4 zeigt den Verlauf unter Berücksichtigung einer mit dem Staudruck vorgespannten Bremse an. Der schnellere Druckaufbau ist offensichtlich.

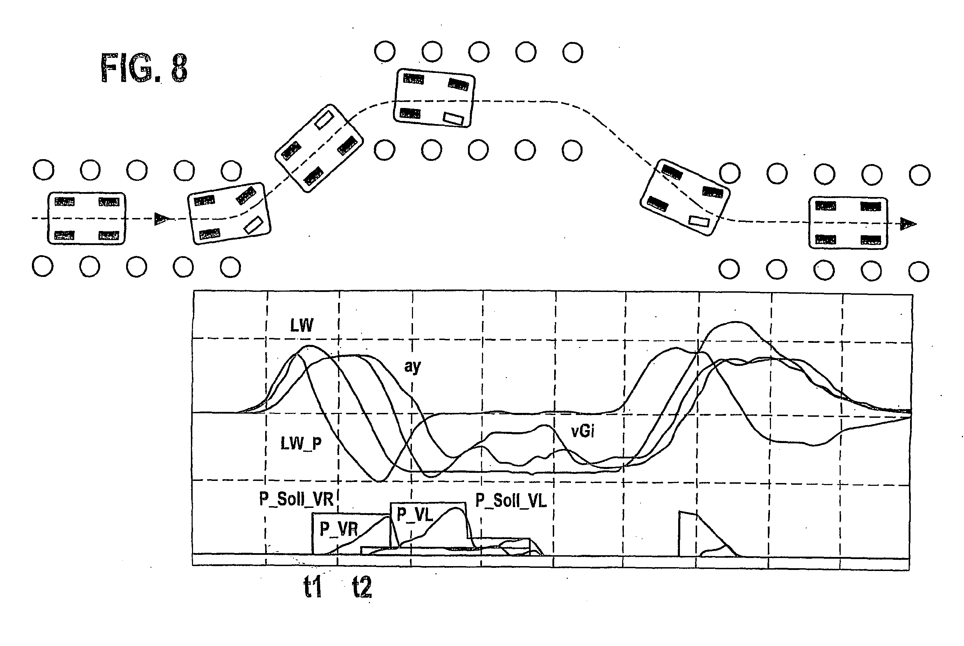

Abschließend ist noch in Fig. 8 der Bremseingriffs- und Druckverlauf bei einem Spurwechselmnöver dargestellt. Dabei handelt es sich um das VDA-Spurwechselmanöver (VDA = Verband der deutschen Automobilindustrie). Im oberen Teil von Fig. 8 ist das Fahrzeug während des Fahrmanövers in Draufsicht gezeichnet. Das hell eingezeichnete Rad wird jeweils gebremst. Im unteren Teil von Fig. 8 ist im oberen Diagramm die zeitliche Verlauf des Lenkwinkels, der Querbeschleunigung und der Gierrate aufgetragen. Im unteren Diagramm sind der zeitliche Verlauf des Solldrucks und des tatsächlichen Drucks am rechten Vorderrad (P_Soll_VR und P_VR) sowie des Solldrucks und des tatsächlichen Drucks am linken Vorderrad (P_Soll_VL und P_VL) eingezeichnet. Zur Zeit t1 erfolgt der Start des Druckaufbaus am rechten Vorderrad und zugleich der Beginn der Staudrucklogik am linken Vorderrad. Zur Zeit t2 erfolgt dann der direkte Druckaufbau am linken Vorderrad.

## Patentansprüche

1. Vorrichtung zur Steuerung der Bremsanlage eines mit einem Radschlupfregelungssystem ausgestatteten Fahrzeugs, in der
- das Radschlupfregelungssystem in der Lage ist,
- als Folge der Erfüllung gegebener Bedingungen (402) den Aufbau erster Bremsmomente an zumindest einem Rad in der zugehörigen zumindest einen Radbremse zu initiieren (403), und
- vorbereitende Maßnahmen für den Aufbau von zweiten Bremsmomenten in den Radbremsen der restlichen Rädern zu initiieren (404), wobei die vorbereitenden Maßnahmen zu keiner oder zu keiner nennenswerten Bremswirkung in den Radbremsen der restlichen Räder führen,
- wobei die vorbereitenden Maßnahmen für den Aufbau von zweiten Bremsmomenten (404) in Reaktion auf den Aufbau der ersten Bremsmomente (403) getroffen werden,
**dadurch gekennzeichnet,**
**dass** das Fahrzeug wenigstens über zwei separate hydraulische Bremskreise verfügt, von denen jeder über
- ein Umschaltventil (303, 304), welches bei einem nicht durch den Fahrer betätigten Bremseingriff in Sperrstellung ist und
- ein Hochdruckschaltventil (302, 305), welches in Durchlassstellung ist, wenn im Bremskreis durch Aktivierung der Rückförderpumpe (306, 307) ein Bremseingriff durchgeführt werden soll,
verfügt
und **dass** die vorbereitenden Maßnahmen für den Aufbau von zweiten Bremsmomenten (404) im Bremskreis, in welchem kein oder kein nennenswertes erstes Bremsmoment als Folge des Vorliegens erster Bedingungen aufgebaut wird, wenigstens darin bestehen, dass in diesem Bremskreis
- die Rückförderpumpe (306, 307), sofern nicht bereits in Betrieb, in Betrieb genommen wird,
- die Einlassventile (308, 311, 312, 315) der Radbremsen, sofern nicht bereits in dieser Stellung, in Durchlasstellung gebracht werden,
- die Auslassventile (309, 310, 313, 314) der Radbremsen, sofern nicht bereits in dieser Stellung, in Sperrstellung gebracht werden,
- das Umschaltventil (303, 304), sofern nicht bereits in dieser Stellung, in Durchlasstellung gebracht wird,
- das Hochdruckschaltventil (302, 305), sofern nicht bereits in dieser Stellung, in Durchlasstellung gebracht wird.

2. Vorrichtung nach Anspruch 1, **dadurch gekennzeichnet**
**dass** es sich bei dem Radschlupfregelungssystem um ein Fahrdynamikregelungssystem handelt.

3. Vorrichtung nach Anspruch 2, **dadurch gekennzeichnet,**
**dass** es sich bei den gegebenen Bedingungen um Bedingungen handelt, bei deren Erfüllung das Fahrzeug in einen bezüglich der Fahrstabilität potentiell gefährlichen Zustand gerät, wobei der bezüglich der Fahrstabilität potentiell gefährliche Zustand daraus besteht, dass der vorliegende Wert wenigstens einer die Fahrdynamik beeinflussenden Größe um mindestens einen vorgebbaren Wert von ihrem Sollwert abweicht.

4. Vorrichtung nach einem der Ansprüche 1 bis 3,
**dadurch gekennzeichnet, dass** die ersten Bremsmomente (403) fahrstabilisierend wirken.

5. Vorrichtung nach Anspruch 1 oder 4, **dadurch gekennzeichnet, dass** als Folge der vorbereitenden Maßnahmen für den Aufbau von zweiten Bremsmomenten (404) die Bremsbeläge möglichst nahe an die jeweilige Bremsscheibe herangebracht werden.

6. Vorrichtung nach Anspruch 1, **dadurch gekennzeichnet**
- **dass** das Fahrzeug neben einem Radschlupfregelungssystem auch über ein System für die Umfeldsensorik verfügt, welches insbesondere mittels der Auswertung der von der Umweltsensorik gelierten Signale in der Lage ist, eine Geschwindigkeits- und Abstandsregelung für das Fahrzeug durchzuführen und
- **dass** in die Überprüfung, ob die gegebenen Bedingungen erfüllt sind, die von der Umweltsensorik gelieferten Signale eingehen.

7. Vorrichtung nach Anspruch 6, **dadurch gekennzeichnet,**
**dass** das System für die Umweltsensorik mit Radar, Lidar oder Video arbeitet.

8. Verfahren zur Steuerung der Bremsanlage eines mit einem Radschlupfregelungssystem ausgestatteten Fahrzeugs, in der das Radschlupfregelungssystem in der Lage ist,
- als Folge der Erfüllung gegebener Bedingungen (402) den Aufbau erster Bremsmomente an zumindest einem Rad in der zugehörigen zumindest einen Radbremse zu initiieren (403), und
- vorbereitende Maßnahmen für den Aufbau von zweiten Bremsmomenten in den Radbremsen der restlichen Rädern zu initiieren (404), wobei die vorbereitenden Maßnahmen zu keiner oder zu keiner nennenswerten Bremswirkung in den Radbremsen der restlichen Räder führen,
enthaltend die Schritte
- Initiierung erster Bremsmomente (403) an zumindest einem Rad in der zugehörigen zumindest einen Radbremse als Folge der Erfüllung der gegebenen Bedingungen (402),
- Einleiten vorbereitender Maßnahmen für den Aufbau von zweiten Bremsmomenten (404) als Reaktion auf die Initiierung erster Bremsmomente (403),
**dadurch gekennzeichnet,**
**dass** das Fahrzeug wenigstens über zwei separate hydraulische Bremskreise verfügt, von denen jeder über
- ein Umschaltventil (303, 304), welches bei einem nicht durch den Fahrer betätigten Bremseingriff in Sperrstellung ist und
- ein Hochdruckschaltventil (302, 305), welches in Durchlassstellung ist, wenn im Bremskreis durch Aktivierung der Rückförderpumpe (306, 307) ein . Bremseingriff durchgeführt werden soll,
verfügt
und **dass** die vorbereitenden Maßnahmen für den Aufbau von zweiten Bremsmomenten (404) im Bremskreis, in welchem kein oder kein nennenswertes erstes Bremsmoment als Folge des Vorliegens erster Bedingungen aufgebaut wird, wenigstens darin bestehen, dass in diesem Bremskreis
- die Rückförderpumpe (306, 307), sofern nicht bereits in Betrieb, in Betrieb genommen wird,
- die Einlassventile (308, 311, 312, 315) der Radbremsen, sofern nicht bereits in dieser Stellung, in Durchlasstellung gebracht werden,
- die Auslassventile (309, 310, 313, 314) der Radbremsen, sofern nicht bereits in dieser Stellung, in Sperrstellung gebracht werden,
- das Umschaltventil (303, 304), sofern nicht bereits in dieser Stellung, in Durchlasstellung gebracht wird,
- das Hochdruckschaltventil (302, 305), sofern nicht bereits in dieser Stellung, in Durchlasstellung gebracht wird.

## Claims

1. Device for controlling the brake system of a vehicle which is equipped with a wheel slip control system, in which device
- the wheel slip control system is capable
- of initiating (403) the building up of first braking torques at at least one wheel in the at least one associated wheel brake as a consequence of given conditions being fulfilled (402), and
- of initiating (404) preparatory measures for building up second braking torques in the wheel brakes of the remaining wheels, wherein the preparatory measures do not lead to any braking effect, or to any appreciable braking effect, in the wheel brakes of the remaining wheels,
- wherein the preparatory measures are taken to build up second braking torques (404) in reaction to the building up of the first braking torques (403),
**characterized in that** the vehicle has at least two separate hydraulic brake circuits, each of which has
- a changeover valve (303, 304) which is in the closed position in the case of a braking intervention which is not activated by the driver, and
- a high-pressure switching valve (302, 305) which is in the open position when a braking intervention is to be carried out in the brake circuit by activating the feedback pump (306, 307),
and **in that** the preparatory measures for building up second braking torques (404) in the brake circuit in which no, or no appreciable, first braking torque is built up as a result of the presence of first conditions, consist at least in the fact that in this brake circuit
- the feedback pump (306, 307) is activated, unless it is already operating,
- the inlet valves (308, 311, 312, 315) of the wheel brakes are placed in the open position, unless they are already in this position,
- the outlet valves (309, 310, 313, 314) of the wheel brakes are placed in the closed position, unless they are already in this position,
- the changeover valve (303, 304) is placed in the open position, unless it is already in this position, and
- the high-pressure switching valve (302, 305) is placed in the open position, unless it is already in this position.

2. Device according to Claim 1, **characterized in that** the wheel slip control system is a vehicle movement dynamics control system

3. Device according to Claim 2, **characterized in that** the given conditions are conditions on whose fulfilment the vehicle goes into a state which is potentially dangerous with respect to driving stability, wherein the state which is potentially dangerous with respect to the driving stability consists in the present value of at least one variable which influences the driving dynamics deviating from its set point value by at least one predefinable value.

4. Device according to one of Claims 1 to 3, **characterized in that** the first braking torques (403) have a travel-stabilizing effect.

5. Device according to Claim 1 or 4, **characterized in that**, as a consequence of the preparatory measures for building up second braking torques (404), the brake linings are moved as close as possible to the respective brake disc.

6. Device according to Claim 1, **characterized**
- **in that** the vehicle also has, in addition to a wheel slip control system, a system for the surroundings sensor system which is capable of carrying out speed and inter-vehicle distance control for the vehicle in particular by means of the evaluation of the signals supplied by the surroundings sensor system, and
- **in that** the signals which are supplied by the surroundings sensor system are included in the checking as to whether the given conditions are fulfilled.

7. Device according to Claim 6, **characterized in that** the system for the surroundings sensor system operates with radar, lidar or video.

8. Method for controlling the brake system of a vehicle which is equipped with a wheel slip control system, in which the wheel slip control system is capable
- of initiating (403) the building up of first braking torques at at least one wheel in the at least one associated wheel brake as a consequence of given conditions (402) being fulfilled, and
- of initiating (404) preparatory measures for the building up of second braking torques in the wheel brakes of the remaining wheels, wherein the preparatory measures do not lead to any braking effect, or any appreciable braking effect, in the wheel brakes of the remaining wheels,
containing the steps
- initiating of first braking torques (403) at at least one wheel in the at least one associated wheel brake as a consequence of the given conditions (402) being fulfilled,
- initiation of preparatory measures for the building up of second braking torques (404) as a reaction to the initiation of first braking torques (403),
**characterized in that** the vehicle has at least two separate hydraulic brake circuits, each of which has
- a changeover valve (303, 304) which is in the closed position in the case of braking intervention which is not activated by the driver, and
- a high-pressure switching valve (302, 305) which is in the open position when a braking intervention is to be carried out in the brake circuit by activating the feedback pump (306, 307),
and **in that** the preparatory measures for building up second braking torques (404) in the brake circuit in which no, or no appreciable, first braking torque is built up as a result of the presence of first conditions, consist at least in the fact that in this brake circuit
- the feedback pump (306, 307) is activated, unless it is already operating,
- the inlet valves (308, 311, 312, 315) of the wheel brakes are placed in the open position, unless they are already in this position,
- the outlet valves (309, 310, 313, 314) of the wheel brakes are placed in the closed position, unless they are already in this position,
- the changeover valve (303, 304) is placed in the open position, unless it is already in this position, and
- the high-pressure switching valve (302, 305) is placed in the open position, unless it is already in this position.

## Revendications

1. Dispositif de commande de l'installation de freinage d'un véhicule équipé d'un système de régulation du patinage des roues, dans lequel
- le système de régulation du patinage des roues est en mesure,
- lorsque des conditions données (402) sont satisfaites, d'amorcer (403) le développement de premiers couples de freinage au niveau d'au moins une roue dans l'au moins un frein de roue associé, et
- d'amorcer (404) des mesures de préparation pour le développement de deuxièmes couples de freinage dans les freins de roue des autres roues, les mesures de préparation ne conduisant à aucune action de freinage ou aucune action de freinage notable dans les freins de roue des autres roues,
- les mesures de préparation pour le développement de deuxièmes couples de freinage (404) étant prises en réaction au développement des premiers couples de freinage (403),
**caractérisé en ce que**
le véhicule dispose d'au moins deux circuits de freinage hydrauliques séparés, dont chacun dispose
- d'une soupape d'inversion (303, 304), qui est dans la position de blocage dans le cas d'une intervention de freinage non commandée par le conducteur et
- d'une soupape de commutation haute pression (302, 305) qui est dans la position de passage lorsqu'une intervention de freinage doit être effectuée dans le circuit de freinage par l'activation de la pompe de refoulement (306, 307),
et **en ce que** les mesures de préparation pour le développement de deuxièmes couples de freinage (404) dans le circuit de freinage, dans lequel aucun couple de freinage ou aucun couple de freinage notable n'est développé suite à la présence de premières conditions, consistent au moins en le fait que dans ce circuit de freinage
- la pompe de refoulement (306, 307), si elle n'est pas déjà en service, est mise en service,
- les soupapes d'entrée (308, 311, 312, 315) des freins de roue, dans la mesure où elles ne sont pas déjà dans cette position, sont amenées dans la position de passage,
- les soupapes de sortie (309, 310, 313, 314) des freins de roue, dans la mesure où elles ne sont pas déjà dans cette position, sont amenées dans la position de blocage,
- la soupape d'inversion (303, 304), dans la mesure où elle n'est pas déjà dans cette position, est amenée dans la position de passage,
- et la soupape de commutation haute pression (302, 305), dans la mesure où elle n'est pas déjà dans cette position, est amenée dans la position de passage.

2. Dispositif selon la revendication 1, **caractérisé en ce que** le système de régulation du patinage des roues est un système de régulation de la dynamique de conduite.

3. Dispositif selon la revendication 2, **caractérisé en ce que** les conditions données sont des conditions qui, lorsqu'elles sont satisfaites, entraînent un état du véhicule potentiellement dangereux en termes de stabilité de conduite, l'état potentiellement dangereux en termes de stabilité de conduite consistant en le fait que la présente valeur d'au moins une grandeur influençant la dynamique de conduite s'écarte d'au moins une valeur prédéterminée de sa valeur de consigne.

4. Dispositif selon l'une quelconque des revendications 1 à 3,
**caractérisé en ce que** les premiers couples de freinage (403) agissent de manière à stabiliser la conduite.

5. Dispositif selon les revendications 1 ou 4, **caractérisé en ce que** du fait des mesures de préparation pour le développement de deuxièmes couples de freinage (404), les garnitures de frein sont rapprochées aussi près que possible du disque de frein respectif.

6. Dispositif selon la revendication 1, **caractérisé en ce que**
- le véhicule dispose, en plus d'un système de régulation du patinage des roues, également d'un système pour l'ensemble des capteurs pour champ périphérique, qui est notamment en mesure, au moyen de l'analyse de signaux fournis par l'ensemble des capteurs pour champ périphérique, d'effectuer une régulation de vitesse et de distance pour le véhicule, et
- **en ce que** les signaux fournis par l'ensemble des capteurs pour champ périphérique interviennent pour déterminer si les conditions données sont satisfaites.

7. Dispositif selon la revendication 6, **caractérisé en ce que** le système pour l'ensemble des capteurs de champ périphérique fonctionne avec un système radar, lidar ou vidéo.

8. Procédé de commande de l'installation de freinage d'un véhicule équipé d'un système de régulation du patinage des roues, dans lequel le système de régulation du patinage des roues est en mesure
- lorsque des conditions données (402) sont satisfaites, d'amorcer (403) le développement de premiers couples de freinage au niveau d'au moins une roue dans l'au moins un frein de roue associé, et
- d'amorcer (404) des mesures de préparation pour le développement de deuxièmes couples de freinage dans les freins de roue des autres roues, les mesures de préparation ne conduisant à aucune action de freinage ou aucune action de freinage notable dans les freins de roue des autres roues,
comprenant les étapes suivantes :
- amorçage de premiers couples de freinage (403) au niveau d'au moins une roue dans l'au moins un frein de roue associé lorsque les conditions données (402) sont satisfaites,
- introduction de mesures de préparation pour le développement de deuxièmes couples de freinage (404) en réaction au développement des premiers couples de freinage (403),
**caractérisé en ce que**
le véhicule dispose d'au moins deux circuits de freinage hydrauliques séparés, dont chacun dispose
- d'une soupape d'inversion (303, 304), qui est dans la position de blocage dans le cas d'une intervention de freinage non commandée par le conducteur et
- d'une soupape de commutation haute pression (302, 305) qui est dans la position de passage lorsqu'une intervention de freinage doit être effectuée dans le circuit de freinage par l'activation de la pompe de refoulement (306, 307),
et **en ce que** les mesures de préparation pour le développement de deuxièmes couples de freinage (404) dans le circuit de freinage, dans lequel aucun couple de freinage ou aucun couple de freinage notable n'est développé suite à la présence de premières conditions, consistent au moins en le fait que dans ce circuit de freinage
- la pompe de refoulement (306, 307), si elle n'est pas déjà en service, est mise en service,
- les soupapes d'entrée (308, 311, 312, 315) des freins de roue, dans la mesure où elles ne sont pas déjà dans cette position, sont amenées dans la position de passage,
- les soupapes de sortie (309, 310, 313, 314) des freins de roue, dans la mesure où elles ne sont pas déjà dans cette position, sont amenées dans la position de blocage,
- la soupape d'inversion (303, 304), dans la mesure où elle n'est pas déjà dans cette position, est amenée dans la position de passage,
- et la soupape de commutation haute pression (302, 305), dans la mesure où elle n'est pas déjà dans cette position, est amenée dans la position de passage.
